# EUROPÄISCHE PATENTSCHRIFT

(11) **EP 1 792 579 B1**
(45) Veröffentlichungstag und Bekanntmachung des Hinweises auf die Patenterteilung: **25.02.2009**
(21) Anmeldenummer: 06025131.1
(22) Anmeldetag: 05.12.2006
(51) Int. Cl.: A61C 5/02

(54) **Wurzelkanalinstrument**
Root canal instrument
Instrument pour canal radiculaire

(30) Priorität: 05.12.2005 DE 102005057996
(43) Veröffentlichungstag der Anmeldung: 06.06.2007
(73) Patentinhaber: Gebr. Brasseler GmbH & Co. KG, D-32657 Lemgo (DE)
(72) Erfinder: Danger, Karl-Heinz, 32758 Detmold (DE); Hagemann, Frank, 32657 Lemgo (DE); Ponzel, Frank, 32756 Detmold (DE)
(74) Vertreter: Weber, Joachim

(56) Entgegenhaltungen:
- EP-A1- 0 684 019
- DE-T2- 69 819 969

## Beschreibung

Die Erfindung bezieht sich auf ein Wurzelkanalinstrument gemäß den Merkmalen des Oberbegriffs des Anspruchs 1.

Im Einzelnen bezieht sich die Erfindung auf ein Wurzelkanalinstrument, welches insbesondere als Wurzelkanalerweiterer ausgebildet ist. Derartige Wurzelkanalerweiterer dienen in erster Linie dazu, den Kanaleingang des Wurzelkanals so zu erweitern, dass er mit nachfolgend zu verwendenden Aufbereitungsinstrumenten oder Wurzelkanalinstrumenten zugängig wird. Weiterhin dienen Wurzelkanalerweiterer dazu, eine Öffnung im Wurzelkanal zu erzeugen, in welche ein Wurzelstift passgenau eingesetzt werden kann.

Wurzelkanalerweiterer sind in der Norm ISO 3630-2 beschrieben. Ähnliche aus dem Stand der Technik bekannte Instrumente zeigen die EP 0 444 155 B1, die US-A-453,254, die US-A-5,735,690 oder die US-A-4,661,061.

Als nachteilig bei den aus dem Stand der Technik bekannten Wurzelkanalinstrumenten erweist es sich, dass diese vielfach den auftretenden Belastungen nicht Stand halten können und durch Bruch versagen.

Aus der AT 83087 ist ein Bohrer vorbekannt, bei welchem die Spanableitungsnuten beiderseits symmetrisch wellenförmig verlaufen. Durch die an der Spitze des Bohrers ausgebildeten Hauptschneiden werden Späne durch die Spanableitungsnuten befördert. Diese bilden keine Nebenschneiden. Der Bohrer schneidet somit nur mit den Hauptschneiden seiner kegeligen Stirnfläche sowie der dort vorgesehenen Querschneide.

Aus der DIN EN ISO 3630-2:2001-09 sind zahnärztliche Wurzelkanalinstrumente vorbekannt, deren Arbeitsteile mit seitlichen, wendelförmigen Schneiden versehen sind, um Wurzelkanäle zu räumen und die Öffnung des koronalen Teils des Wurzelkanals zu vergrößern. Die Arbeitsteile können zylindrisch, ballig oder flammenförmig ausgebildet sein.

Die DE 696 08 101 T2 zeigt einen endodontischen Instrumentensatz mit einer Mehrzahl von konischen Wurzelkanalfeilen, welche jeweils an ihrem Außenumfang mit Schneiden versehen sind und nacheinander zum Einsatz gelangen.

Ein rotierendes Bohr- bzw. Fräswerkzeug für medizinisch-/zahnmedizinische Knochen- und Dentin-Bearbeitung ist aus der DE 91 07 924 U1 bekannt. Das Werkzeug dient zur Bearbeitung von Knochen oder Zahnbein und ist aus Wolfram oder einer Wolframbasislegierung gefertigt.

Die DE 698 19 969 T2 zeigt einen Bohrer mit Spannuten mit abwechselnd wendelförmigen und geraden Abschnitten. Dabei kann die Form der Spannut mit einem positiven oder einem negativen Steigungswinkel versehen sein, wobei der mittlere Steigungswinkel auf der gesamten Länge des Instruments positiv sein muss, da sonst das entfernte Material nicht durch die Rotationsbewegung des Instruments abgeführt wird.

Der Erfindung liegt die Aufgabe zugrunde, ein Wurzelkanalinstrument der eingangs genannten Art zu schaffen, welches bei einfachem Aufbau und bei einfacher, kostengünstiger Herstellbarkeit die Nachteile des Standes der Technik vermeidet, eine hohe Festigkeit aufweist und eine zuverlässige Wurzelkanalaufbereitung ermöglicht.

Erfindungsgemäß wird die Aufgabe durch die Merkmalskombination des Hauptanspruchs gelöst, die Unteransprüche zeigen weitere vorteilhafte Ausgestaltungen der Erfindung.

Erfindungsgemäß ist somit ein Wurzelkanalinstrument geschaffen worden, welches über die Länge des Kopfes mit unterschiedlichen Drallwinkeln versehen ist. Diese unterschiedlichen Drallwinkel sind so ausgebildet, dass das Wurzelkanalinstrument sowohl in der Vorwärtsbewegung, bei welcher eine üblicherweise rechtsdrehende Vorschubbewegung in den Wurzelkanal hinein erfolgt, als auch bei einer Rückwärtsbewegung, vorteilhaft einsetzbar ist. In beiden diesen Bewegungen (Vorwärtsbewegung und Rückwärtsbewegung) werden die Späne oder Gewebepartikel koronal aus dem Wurzelkanal heraus und nicht apikal in den Kanal befördert. Hierdurch unterscheidet sich das erfindungsgemäße Wurzelkanalinstrument von den aus dem Stand der Technik bekannten Wurzelkanalinstrumenten. Bei diesen wird zwar das Spanmaterial oder Gewebematerial bei der Vorwärtsbewegung koronal heraus gefördert. Bei einer Rückwärtsbewegung werden jedoch die Späne oder Gewebepartikel zur Spitze des Wurzelkanalinstruments und damit zur Spitze des Wurzelkanals geschoben. Dies führt zu einer erhöhten Reibung, zu Verklemmungen und zu einem erhöhten Kraftaufwand, der letztendlich zu einem Versagen des Wurzelkanalinstrumentes durch Bruch führen kann.

Durch die erfindungsgemäß vorgesehenen unterschiedlichen Drallwinkel ist das erfindungsgemäße Wurzelkanalinstrument sowohl in der Vorwärtsbewegung als auch in der Rückwärtsbewegung betriebssicher einsetzbar.

Erfindungsgemäß weist die Schneide im Übergangsbereich von dem positiven zu dem negativen Drallwinkel einen Drallwinkel von 0° auf.

Die jeweiligen Längen des Kopfes, die mit den unterschiedlichen Drallwinkeln versehen sind, können den jeweiligen Anforderungen in einfacher Weise angepasst werden, insbesondere unterschiedlichen Formen des Kopfes (beispielsweise flammenförmig). Bei der Erfindung ist es vorteilhaft, wenn ein mittlerer Bereich des Kopfes, bezogen auf eine senkrecht zur Drehachse stehende Ebene, im Wesentlichen symmetrisch ausgebildet ist. Dies bedeutet, dass von dem Bereich, in welchem der Drallwinkel 0° aufweist, jeweils benachbarte Kopf-Bereiche vorgesehen sind, die zueinander symmetrisch sind und somit einen gleichen Drallwinkelverlauf haben.

Das erfindungsgemäße Wurzelkanalinstrument kann mit zwei Schneiden, mit drei Schneiden oder mit vier Schneiden versehen sein.

In einer besonders günstigen Ausgestaltung der Erfindung ist vorgesehen, dass das Wurzelkanalinstrument aus Nickel-Titan gefertigt ist. Zusätzlich ist möglich, dieses mit einer Titan-Nitrid-Beschichtung zu versehen, um den Verschleiß zu minimieren und die Lebensdauer zu erhöhen.

Im Folgenden wird die Erfindung anhand eines Ausführungsbeispiels in Verbindung mit der Zeichnung beschrieben. Dabei zeigt:
- Fig. 1: eine perspektivische Ansicht eines erfindungsgemäßen Wurzelkanalinstruments,
- Fig. 2: eine Seitenansicht des Kopfes des in Fig.1 gezeigten Ausführungsbeispiels,
- Fig. 3: eine Seitenansicht des Kopfes, in gedrehter Ansicht, bezogen auf Fig.2,
- Fig. 4: eine Spitzenansicht des Kopfes mit den Ausgestaltungen der Figuren 2 und 3, ebenfalls mit zwei Schneiden,
- Figuren 5 bis 7: Ansichten analog den Figuren 2 bis 4 eines mit drei Schneiden versehenen Ausführungsbeispiels,
- Fig. 8: eine vergrößerte Seitenansicht eines Ausführungsbeispiels mit zwei Schneiden zur Verdeutlichung der Wirkungsweise,
- Fig. 9: eine Seitenansicht, analog Fig. 8, eines Ausführungsbeispiels gemäß dem Stand der Technik und
- Fig. 10: eine Seitenansicht eines Kopfes gemäß dem Stand der Technik.

Bei den folgenden Ausführungsbeispielen sind gleiche Teile jeweils mit gleichen Bezugsziffern versehen.

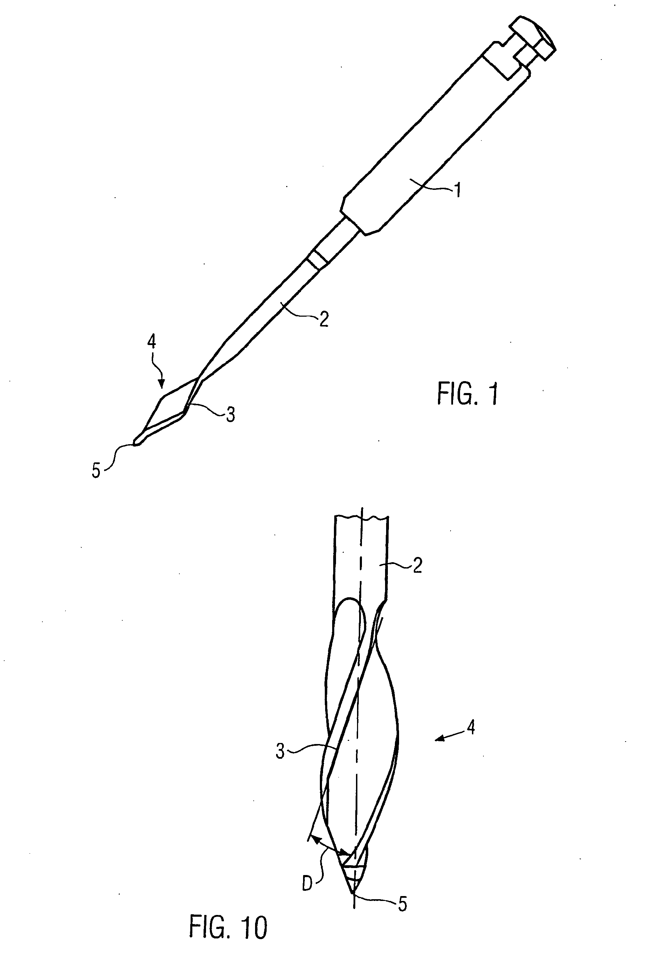

Die Fig. 10 zeigt eine Seitenansicht eines aus dem Stand der Technik bekannten Kopfes eines Wurzelkanalinstruments. Dieses umfasst einen Kopf 4, welcher einstückig mit einem Hals 2 verbunden ist. Der Kopf 4 umfasst eine Spitze 5. Der Hals 2 ist einstückig mit einem Schaft (s. Fig. 1) verbunden. Dieser ist mit üblichen Einspannmitteln versehen. Diesbezüglich kann auf den Stand der Technik verwiesen werden. Gleiches gilt für die sonstige Dimensionierung (Längen, Durchmesser, etc.). Diese ergeben sich insbesondere aus ISO 3630-2.

Wie aus Fig. 10 ersichtlich ist, umfasst der Kopf 4 drei Schneiden 3. Bezogen auf die Mittelachse oder Drehachse ergibt sich in üblicher Definition der Drallwinkel D. Dieser ändert sich selbstverständlich über den Verlauf der Schneide 3 hinsichtlich seines Betrages, da der Kopf 4 in der Seitenansicht flammenförmig ausgebildet ist.

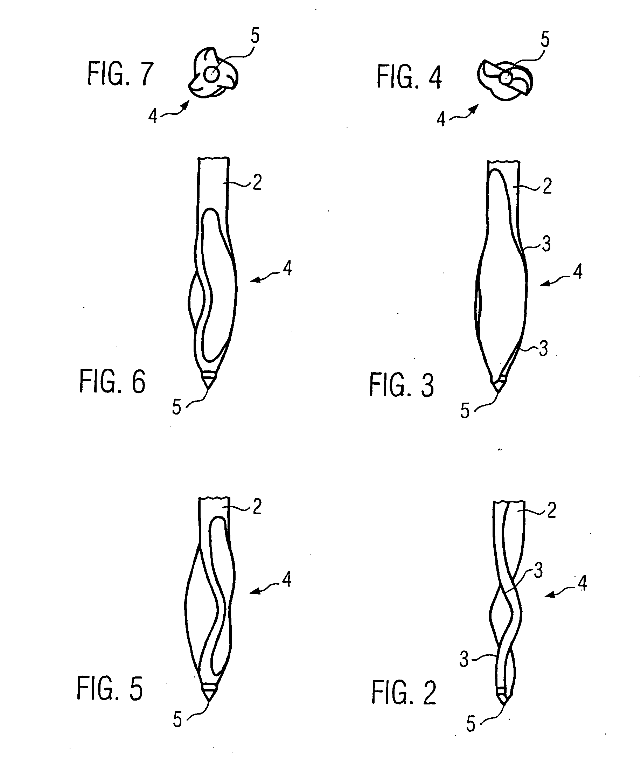

Die Fig. 1 zeigt eine Seitenansicht eines Ausführungsbeispiels des erfindungsgemäßen Wurzelkanalinstruments mit zwei Schneiden. Der Kopf 4 sowie der Hals 2 sind einstückig ausgebildet und beispielsweise aus Nickel-Titan gefertigt. Der Schaft 1 kann aus Kunststoff gefertigt sein. Vergrößerte Darstellungen des Kopfes ergeben sich aus den Figuren 2 bis 4. Dabei ist insbesondere ersichtlich, dass der Drallwinkel (s. insbesondere Fig. 2) sich von einem positiven Drallwinkel für eine rechtsdrehende Vorwärtsbewegung im vorderen Bereich des Kopfes 4 zu einem negativen Drallwinkel für eine Rückbewegung (linksdrehend) im rückwärtigen, dem als 2 zugewandten Bereich des Kopfes ändert. In einem mittleren Bereich des Kopfes 4 ist der Drallwinkel 0°. Die um 90° gedrehte Darstellung der Fig. 3 zeigt nochmals verdeutlichend die Zusammenhänge.

In den Figuren 5 bis 7 sind Ansichten (analog den Figuren 2 bis 4) eines Kopfes mit drei Schneiden dargestellt. Dabei ergeben sich analoge Zusammenhänge wie bei den Darstellungen der Figuren 2 bis 4.

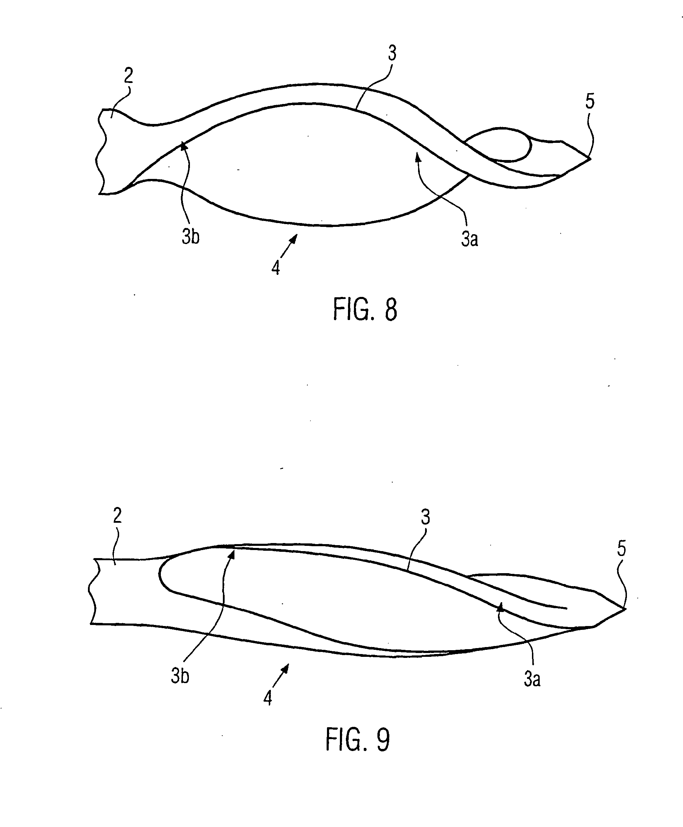

Die Figuren 8 und 9 zeigen in der Seitenansicht einen erfindungsgemäß ausgebildeten Kopf (Fig. 8) sowie einen aus dem Stand der Technik bekannten Kopf (Fig. 9). Daraus ist ersichtlich, dass die mit dem Bezugszeichen 3a bezeichnete aktive Schneidkante für die Vorwärtsbewegung bei beiden Köpfen hinsichtlich ihres Drallwinkels so ausgebildet ist, dass Späne oder Gewebepartikel koronal, d.h. in Richtung des Halses 2 aus dem Wurzelkanal heraus befördert oder gefördert werden. Bei einer Rückbewegung befindet sich weiterhin die Schneide 3 im Eingriff. Die Schneide 3 ist in üblicher Weise mit einem Freischliff versehen, so dass sich die Spangeometrien ergeben, die auch aus dem Stand der Technik bekannt sind. Hierauf braucht an dieser Stelle nicht separat eingegangen zu werden. Der bei einer Rückwärtsbewegung aktive Bereich der Schneidekante ist mit dem Bezugszeichen 3b gekennzeichnet. Aus den Darstellungen der Figuren 8 und 9 ergibt sich, dass erfindungsgemäß (Fig. 8) bei einer Rückwärtsdrehung dieser aktive Bereich 3b der Schneidkante so ausgebildet ist, dass die Späne weiterhin koronal aus dem Wurzelkanal heraus befördert werden. Im Gegensatz hierzu ist der bei einer Rückwärtsbewegung aktive Bereich 3b der Schneidkante so ausgebildet, dass die Späne oder Gewebepartikel zur Instrumentenspitze transportiert werden und somit dazu führen, dass der Wurzelkanal durch die Späne zugesetzt wird.

Die Erfindung ist nicht auf die gezeigten Ausführungsbeispiele sowie die Dimensionierungen und Ausgestaltungen des Kopfes des Wurzelkanalinstruments beschränkt. Insbesondere ist die Erfindung nicht auf Wurzelkanalerweiterer beschränkt, sie kann auch bei anderen Wurzelkanalinstrumenten eingesetzt werden. Ebenso ist es möglich, an Stelle eines flammenförmigen Kopfes einen doppel-kegeligen Kopf oder ähnliche andere Kopfformen vorzusehen.

### Bezugszeichenliste

- 1: Schaft
- 2: Hals
- 3: Schneide
- 4: Kopf
- 5: Spitze
- D: Drallwinkel

## Patentansprüche

1. Wurzelkanalinstrument mit einem Schaft (1), welcher mit einem Hals (2) verbunden ist, an dessen freiem Ende ein mit zumindest einer Schneide (3) versehener Kopf (4) angeordnet ist, **dadurch gekennzeichnet, dass** die Schneide (3) längs des Kopfes (4) von einem der Spitze (5) des Kopfs (4) zugewandten Bereich mit einem positiven Drallwinkel zu einem dem Hals (2) zugewandten Bereich mit einem negativen Drallwinkel versehen ist, wobei die Schneide (3) im Übergangsbereich von dem positiven zu dem negativen Drallwinkel einen Drallwinkel von 0° aufweist, wobei ein mittlerer Bereich des Kopfes (4), bezogen auf eine senkrecht zur Drehachse stehende Ebene, im Wesentlichen symmetrisch ausgebildet ist und der Kopf (4) in der Seitenansicht flammenförmig ausgebildet ist.

2. Wurzelkanalinstrument nach Anspruch 1, **dadurch gekennzeichnet, dass** der Kopf (4) mit zwei Schneiden (3) versehen ist.

3. Wurzelkanalinstrument nach Anspruch 1 oder 2, **dadurch gekennzeichnet, dass** der Kopf (4) mit drei Schneiden (3) versehen ist.

4. Wurzelkanalinstrument nach Anspruch 1 oder 2, **dadurch gekennzeichnet, dass** der Kopf (4) mit vier Schneiden (3) versehen ist.

5. Wurzelkanalinstrument nach einem der Ansprüche 1 bis 4, **dadurch gekennzeichnet, dass** ein aktiver Bereich (3a) der Schneide (3), welcher einer Spitze (5) des Kopfes (4) zugewandt ist, bei einer Vorwärtsbewegung.des Wurzelkanalinstruments zur koronalen Förderung von Spänen ausgebildet ist und dass ein aktiver Bereich (3b) der Schneide (3), welcher dem Hals (2) zugewandt ist, bei einer Rückwärtsbewegung des Wurzelkanalinstruments zur koronalen Förderung von Spänen ausgebildet ist.

6. Wurzelkanalinstrument nach einem der Ansprüche 1 bis 5, **dadurch gekennzeichnet, dass** das Wurzelkanalinstrument in Form eines Wurzelkanalerweiterers ausgebildet ist.

7. Wurzelkanalinstrument nach Anspruch 6, **dadurch gekennzeichnet, dass** dieses als Gates-Typ-Wurzelkanalerweiterer ausgebildet ist.

8. Wurzelkanalinstrument nach einem der Ansprüche 1 bis 7, **dadurch gekennzeichnet, dass** dieses im Wesentlichen gemäß ISO 3630-2 :2001-09 ausgebildet ist.

9. Wurzelkanalinstrument nach einem der Ansprüche 1 bis 8, **dadurch gekennzeichnet, dass** dieses in Form eines Konus oder Doppelkonus ausgebildet ist.

10. Wurzelkanalinstrument nach einem der Ansprüche 1 bis 9, **dadurch gekennzeichnet, dass** dieses aus Nickel-Titan gefertigt ist.

11. Wurzelkanalinstrument nach einem der Ansprüche 1 bis 10, **dadurch gekennzeichnet, dass** zumindest der Kopf (4) mit Titan-Nitrid beschichtet ist.

12. Wurzelkanalinstrument nach einem der Ansprüche 1 bis 9, **dadurch gekennzeichnet, dass** dieses aus nichtrostendem Stahl gefertigt ist.

## Claims

1. A root canal instrument having a shaft (1) which is connected to a neck (2), at the free end of which a head (4) including at least one cutting edge (3) is arranged, **characterized in that** the cutting edge (3) along the head (4) is provided with a positive twisting angle from a portion facing the tip (5) of the head (4) and a portion facing the neck (2) having a negative twisting angle, wherein the cutting edge (3) has a twisting angle of 0° in the transitional area from the positive twisting angle to the negative twisting angle, wherein a center portion of the head (4) with respect to the plane perpendicular to the rotary axis is formed substantially symmetrical and the head (4) is formed flame-shaped in the lateral view.

2. The root canal instrument of claim 1, **characterized in that** the head (4) is provided with two cutting edges (3).

3. The root canal instrument of claim 1 or 2, **characterized in that** the head (4) is provided with three cutting edges (3).

4. The root canal instrument of claim 1 or 2, **characterized in that** the head (4) is provided with four cutting edges (3).

5. The root canal instrument of one of claims 1 to 4, **characterized in that** an active portion (3a) of the cutting edge (3) facing a tip (5) of the head (4) is formed upon a forward movement of the root canal instrument for a coronal extraction of chips and that an active portion (3b) of the head (3) facing the neck (2) is formed upon a rearward movement of the root canal instrument for a coronal extraction of chips.

6. The root canal instrument of one of claims 1 to 5, **characterized in that** the root canal instrument is formed as a root canal expander.

7. The root canal instrument of claim 6, **characterized in that** same is formed as a Gates type root canal expander.

8. The root canal instrument of one of claims 1 to 7, **characterized in that** same is formed substantially according to ISO 3630-2:2001-09.

9. The root canal instrument of one of claims 1 to 8, **characterized in that** same is formed as a cone or double cone.

10. The root canal instrument of one of claims 1 to 9, **characterized in that** same is made of nickel titanium.

11. The root canal instrument of one of claims 1 to 10; **characterized in that** at least the head (4) is coated with titanium nitride.

12. The root canal instrument of one of claims 1 to 9, **characterized in that** same is made of stainless steel.

## Revendications

1. Instrument pour canal radiculaire avec une tige (1) qui est raccordée à un collet (2) à l'extrémité libre duquel est montée une tête (4) munie d'au moins un taillant (3), **caractérisé en ce que** le taillant (3) présente, le long de la tête (4), une zone dirigée vers la pointe (5) de la tête (4) avec un angle d'hélice positif négatif et une zone dirigée vers le collet (2) avec un angle d'hélice négatif, le taillant (3) présentant un angle d'hélice de 0° dans la zone de transition entre l'angle d'hélice positif et l'angle d'hélice négatif, une zone médiane de la tête (4) étant sensiblement symétrique par rapport à un plan placé perpendiculairement à l'axe de rotation et la tête (4) étant conçue en forme de flamme suivant la vue de côté.

2. Instrument pour canal radiculaire selon la revendication 1, **caractérisé en ce que** la tête (4) est munie de deux taillants (3).

3. Instrument pour canal radiculaire selon la revendication 1 ou 2, **caractérisé en ce que** la tête (4) est munie de trois taillants (3).

4. Instrument pour canal radiculaire selon la revendication 1 ou 2, **caractérisé en ce que** la tête (4) est munie de quatre taillants (3).

5. Instrument pour canal radiculaire selon l'une quelconque des revendications 1 à 4, **caractérisé en ce qu'**une zone active (3a) du taillant (3), qui est dirigée vers une pointe (5) de la tête (4), est conçue pour l'extraction en couronne de copeaux lors d'un mouvement d'avance de l'instrument pour canal radiculaire et **en ce qu'**une zone active (3b) du taillant (3), qui est dirigée vers le collet (2), est conçue pour l'extraction en couronne de copeaux lors d'un mouvement de recul de l'instrument pour canal radiculaire.

6. Instrument pour canal radiculaire selon l'une quelconque des revendications 1 à 5, **caractérisé en ce que** l'instrument pour canal radiculaire est conçu sous la forme d'un élargisseur de canal radiculaire.

7. Instrument pour canal radiculaire selon la revendication 6, **caractérisé en ce que** celui-ci est conçu sous la forme d'un élargisseur de canal radiculaire du type Gates.

8. Instrument pour canal radiculaire selon l'une quelconque des revendications 1 à 7, **caractérisé en ce que** celui-ci est conçu sensiblement selon la norme ISO 3630-2 : 2001-09.

9. Instrument pour canal radiculaire selon l'une quelconque des revendications 1 à 8, **caractérisé en ce que** celui-ci est conçu sous la forme d'un cône ou d'un cône double.

10. Instrument pour canal radiculaire selon l'une quelconque des revendications 1 à 9, **caractérisé en ce que** celui-ci est fabriqué en nickel-titane.

11. Instrument pour canal radiculaire selon l'une quelconque des revendications 1 à 10, **caractérisé en ce qu'**au moins la tête (4) est munie d'un revêtement de nitrure de titane.

12. Instrument pour canal radiculaire selon l'une quelconque des revendications 1 à 9, **caractérisé en ce que** celui-ci est fabriqué en acier inoxydable.
